# EUROPÄISCHE PATENTSCHRIFT

(11) **EP 1 465 225 B1**
(45) Veröffentlichungstag und Bekanntmachung des Hinweises auf die Patenterteilung: **24.11.2010**
(21) Anmeldenummer: 03007702.8
(22) Anmeldetag: 03.04.2003
(51) Int. Cl.: H01H 71/02, H01R 9/26

(54) **Adaptervorrichtung für Installationsgeräte**
Adapter device for installation apparatus
Adaptateur pour dispositifs d installations

(43) Veröffentlichungstag der Anmeldung: 06.10.2004
(73) Patentinhaber: SIEMENS AKTIENGESELLSCHAFT, 80333 München (DE)
(72) Erfinder: Eckert, Gunther, 93142 Maxhütte-Haidhof (DE); Rieger, Thomas, 93057 Regensburg (DE); Vierling, Winfried, 93073 Neutraubling (DE)

(56) Entgegenhaltungen:
- EP-A- 0 986 136
- DE-U- 29 918 129
- FR-A- 2 779 269
- US-A- 4 270 035
- US-B1- 6 278 605
- PATENT ABSTRACTS OF JAPAN vol. 018, no. 139 (E-1519), 8. März 1994 (1994-03-08) & JP 05 325767 A (MATSUSHITA ELECTRIC WORKS LTD), 10. Dezember 1993 (1993-12-10)

## Beschreibung

Die vorliegende Erfindung betrifft Installationsgeräte wie beispielsweise Leitungsschutzschalter oder Fernantriebe mit einem Gehäuse, an dessen Wand mindestens eine Bohrung und/oder mindestens ein Zapfen zum Verbinden mit einem weiteren Installationsgerät angeordnet ist.

Installationsgeräte wie beispielsweise Leitungsschutzschalter, Fernantriebe, Arbeitsstromauslöser und dergleichen werden typischerweise in Reihe aneinander angeordnet. In diesem Zusammenbau werden sie mechanisch gekoppelt, damit sie sich gegenseitig antreiben beziehungsweise auslösen können. Für diesen Zusammenbau besitzen die Installationsgeräte in der Regel formschlüssige Verbindungselemente, die beispielsweise als Stift beziehungsweise Bohrung an der jeweiligen Geräteseite ausgebildet sind. Üblicherweise werden Zusatzkomponenten an ihren Seiten mit Stiften beziehungsweise Zapfen ausgestattet.

Die Hauptaufgabe der Verbindungselemente ist das Aufnehmen von Kräften parallel und Momenten senkrecht zur Gehäuseseite beim Schalten, wenn mehrere Geräte miteinander gekoppelt sind. Dies ist beispielsweise der Fall bei mehreren miteinander gekoppelten Leitungsschutzschaltern, die gängigerweise als mehrpolige Ausführung bezeichnet werden. Eine weitere Aufgabe der Verbindungselemente kann in einer Codierung bestehen, so dass nur Geräte zusammengebaut werden können, die aufeinander abgestimmt sind.

Für das Aufnehmen von Kräften senkrecht zur Geräteseite (X-Richtung) werden Befestigungselemente, z. B. Klammern, verwendet.

Bei der Ankopplung einer Zusatzkomponente an ein Gerät einer anderen Gerätereihe besteht unter Umständen das Problem, dass nicht alle Verbindungs- und Befestigungselemente passend positioniert sind. So kann beispielsweise der Anbau einer Zusatzkomponente, wie beispielsweise eines Fernantriebs, eines Arbeitsstromauslösers, eines Unterspannungsauslösers, eines Hilfsschalters und dergleichen an verschiedene Gerätereihen mit unterschiedlichen Positionen der Verbindungselemente auch dadurch behindert werden, dass alle denkbaren Verbindungselemente an den Geräteseiten vorgesehen sind. Ebenso können Verbindungselemente beziehungsweise Befestigungselemente stören, wenn die Zusatzkomponente wahlweise links oder rechts anbaubar sein soll.

Die aufwändigste Lösung dieser Problematik besteht darin, dass für jede Gerätereihe eigene Zusatzgeräte verwendet werden. Eine flexiblere Lösung besteht darein, dass die Verbindungselemente beziehungsweise Befestigungselemente entfernbar ausgebildet sind. Sind pro Verbindung mehrere Verbindungs- und Befestigungselemente vorgesehen, so ist das Einsetzen der jeweils nötigen Elemente jedoch unkomfortabel und aufwändig.

Aus der Druckschrift JP 05325767 A ist ein Hilfsanschlussgerät für einen Unterbrecher bekannt. Das Hilfsanschlussgerät besitzt eine hohle Anschlussbasis, die mit mehreren Anschlüssen bestückt ist. Es wird an den Unterbrecher mechanisch angesteckt, wobei gleichzeitig die elektrische Kontaktierung erfolgt.

Darüber hinaus ist aus der Druckschrift US 6,278,605 Bl ein modulares Unterbrechersystem bekannt. Ein zweites Modul wird unmittelbar an die Seite eines ersten Moduls montiert. Leiterstifte des einen Moduls ragen in entsprechende Aufnahmen des anderen Moduls.

Die Aufgabe der vorliegenden Erfindung besteht somit darin, eine komfortable Verbindung zwischen Installationsgeräten vorzuschlagen.

Erfindungsgemäß wird diese Aufgabe gelöst durch **ein Installationsgerät nach Anspruch 1.**

Die formschlüssigen Verbindungselemente sind entsprechend der Erfindung mit einer Platte verbunden. Mit einer jeweils geeigneten Platte kann so eine anzubauende Zusatzkomponente an eine Gerätereihe angepasst werden.

Vorteilhafterweise werden damit keine eigens angepassten Zusatzkomponenten benötigt, wodurch die Herstellungskosten, Lagerkosten und Logistikaufwand beim Hersteller verringert werden. Eine Verringerung der Lagerkosten und des Logistikaufwands durch die erfindungsgemäße Adapterlösung ist selbstverständlich auch beim Händler zu beobachten. Ein weiterer Vorteil besteht darin, dass die Zwischen- beziehungsweise Adapterplatten und damit die Verbindungselemente leicht und komfortabel montiert werden können.

Vorzugsweise ist die Adapterplatte in dem Gerätegehäuse, insbesondere dem der Zusatzkomponente, vollständig versenkbar. Dadurch kann ermöglicht werden, dass das genormte Teilungsmaß von z. B. 18 mm für Leitungsschutzschalter und dergleichen erhalten bleiben kann.

Die Zapfen beziehungsweise Stifte der Adaptervorrichtung können so gestaltet sein, dass sie aus dem Grundelement, d. h. der Platte oder dem jeweiligen Gerät herausgenommen werden können. Dies hat den Vorteil, dass die Adaptervorrichtung beziehungsweise das Installationsgerät noch flexibler gestaltet werden kann.

Durch das im Wesentlichen ebene, insbesondere plattenförmige Grundelement kann ein Befestigungselement zum Befestigen von Installationsgeräten aneinander zumindest teilweise abgedeckt werden. Damit sinkt zum einen das Verletzungsrisiko und zum anderen können die Verbindungen benutzerfreundlicher hergestellt werden, da nicht benötigte Befestigungselemente verdeckt sind und nicht stören.

Befestigungselemente können auch in das Grundelement beziehungsweise die Adaptervorrichtung integriert werden. Damit kann die Flexibilität der Verbindungen weiter erhöht werden, wenn das Grundelement senkrecht zu seiner Hauptausdehnung (X-Richtung) anderweitig an eines der Geräte fixiert ist.

In die Adaptervorrichtung beziehungsweise sein Grundelement kann ein bewegbarer Mitnehmer eingebaut sein. Dadurch können beispielsweise Drehbewegungen eines Auslösers vom einen Leitungsschutzschalter zum nächsten übertragen werden. Ferner kann beispielsweise die Griffbewegung eines Schalters durch einen speziellen Mitnehmer auf einen benachbarten Schalter oder Antrieb übertragen werden.

Das Grundelement beziehungsweise die Platte der Adaptervorrichtung kann eine abgeschrägte Randfläche besitzen, so dass es, wenn es in einen entsprechenden formschlüssigen Hinterschnitt des Installationsgeräts eingeschoben ist (Y- oder Z-Richtung), in X-Richtung an dem Installationsgerät fixiert ist. Der Hinterschnitt kann aber auch beispielsweise durch eine Stufe realisiert werden.

Vorzugsweise werden Befestigungselemente an dem Installationsgerät im Bereich der Vertiefung angeordnet. Damit können diejenigen Befestigungselemente abgedeckt werden, die für diese spezielle Verbindung nicht benötigt werden.

Damit die Adapterplatte nicht über das Gehäuse des zu verbindenden Installationsgeräts ragt, sollten die im Bereich der Vertiefung angeordneten Befestigungselemente in der Vertiefung versenkbar sein.

Jeweils eine Vertiefung kann an beiden Montageseiten des Installationsgeräts vorgesehen sein. Damit sind die Installationsgeräte beliebig nach links und rechts erweiterbar.

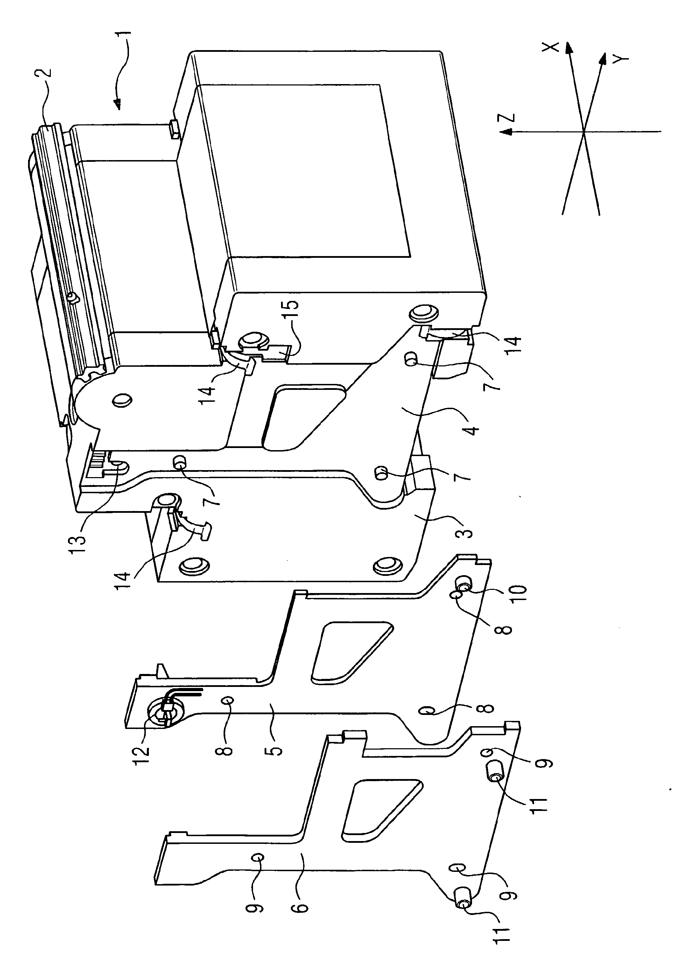

Die vorliegende Erfindung wird nun anhand der beigefügten Zeichnung näher erläutert, die eine dreidimensionale Ansicht eines erfindungsgemäßen Installationsgeräts mit Adaptervorrichtung zeigt.

Die nachfolgend geschilderten Ausführungsformen sind bevorzugte Ausführungsbeispiele der vorliegenden Erfindung.

In der Zeichnung ist ein Installationsgerät 1, hier ein Fernantrieb, dreidimensional dargestellt. Der Fernantrieb 1 besitzt eine Leiste 2, die mit dem Griff beziehungsweise Hebel eines oder mehrerer Leitungsschutzschalter zu deren Schaltbewegung koppelbar ist. Ferner besitzt der Fernantrieb in seiner Seitenfläche 3 eine Vertiefung 4. In diese Vertiefung 4 ist eine Adaptervorrichtung beziehungsweise Zwischenplatte 5 oder 6 einsetzbar. Ein weiteres, nicht dargestelltes Installationsgerät, ist bei eingesetzter Zwischenplatte mit dem Fernantrieb 1 koppelbar.

Die Vertiefung 4 ist in X-Richtung (vergleiche Figur) derart dimensioniert, dass die Zwischenplatte 5 oder 6 im eingesetzten Zustand mit ihrer Hauptausdehnungsfläche nicht über die Seitenfläche 3 des Fernantriebs 1 ragt. Die Vertiefung selbst stellt bereits einen Verdrehschutz bezüglich einer in X-Richtung verlaufenden Drehachse der Zwischenplatte 5 oder 6 dar. Zur genaueren Positionierung der jeweiligen Zwischenplatte 5, 6 im Hinblick auf Fertigungstoleranzen sind Zapfen 7 in der Vertiefung 4 angeordnet, die in Bohrungen 8, 9 der jeweiligen Zwischenplatte 5, 6 eingreifen. Zusätzlich können die Zapfen 7 auch zur Codierung der Zwischenplatten 5 und 6 verwendet werden. Damit können nur spezifische Zwischenplatten 5, 6 in die Vertiefung 4 eingesetzt werden.

Die Zwischenplatten 5 und 6 besitzen im Wesentlichen die Kontur der Aussparung 4 einschließlich etwaiger Aussparungen. Darüber hinaus sind in den Zwischenplatten 5 und 6 Bohrungen 8 und 9 vorgesehen, die den Zapfen 7 entsprechen.

Die zwischenplatten 5 und 6 besitzen ferner Zapfen 10 und 11, die zum Fixieren eines anzuschließenden Installationsgeräts dienen. Da die Oberfläche der Zwischenplatten 5 und 6 im Wesentlichen mit der Oberfläche der Geräteseite 3 plan ist, stellen die Zapfen 10 und 11 einen Verschiebeschutz in Y- und Z-Richtung sowie einen Verdrehschutz gegen ein Verdrehen des anzukoppelnden Installationsgeräts um die X-Achse dar.

Wie leicht zu erkennen ist, sind die Zapfen 11 der Zwischenplatte 6 an einer anderen Stelle positioniert als der Zapfen 10 der Zwischenplatte 5. Die Zwischenplatte 5 kann damit für eine anderes Installationsgerät verwendet werden als die Zwischenplatte 6. Der Austausch der beiden Zwischenplatten gestaltet sich sehr einfach. Demgegenüber wäre der Austausch einzelner Stifte, wie es aus dem Stand der Technik bekannt ist, verhältnismäßig unkomfortabel und fehlerbehaftet.

Die Zwischenplatte 5 weist ferner einen Mitnehmer 12 auf. Dieser dient zur Übertragung einer (Dreh-)bewegung von der einen Installationskomponente 1 auf die andere (nicht dargestellt). Für den Mitnehmer 12 ist daher in der Vertiefung 4 ein Eingriff 13 vorgesehen.

Generell können die Zwischenplatten 5 und 6 auch so ausgeführt sein, dass sie gewendet werden können. Somit können zwei verschieden codierte Gerätereihen angeschlossen werden. Die Zwischenplatten 5 und 6 und die entsprechenden Geräteseiten können ferner so gestaltet sein, dass die Zwischenplatten an beiden Seiten des Installationsgeräts 1 eingesetzt werden können, so dass Zusatzkomponenten, d. h. weitere Installationsgeräte, links und/oder rechts angeschlossen werden können.

Das Installationsgerät 1 verfügt über Befestigungselemente 14. Sie dienen, wie bereits erwähnt, zum Befestigen einer Zusatzkomponente im Wesentlichen in X-Richtung. Die Befestigungselemente sind hier als Klammern oder Haken ausgestaltet, die in entsprechende Vertiefungen in der auszuschließenden, nicht dargestellten Zusatzkomponente beziehungsweise dem weiteren Installationsgerät einrastbar sind. Falls die Befestigungselemente 14 für die anzukoppelnde Zusatzkomponente nicht benötigt werden, können sie in eine Aussparung 15 versenkt werden. Das Befestigungselement 14 in der Zeichnung unten rechts ist in diesem versenkten Zustand dargestellt. Falls die Zwischenplatte 5 oder 6 in die Vertiefung 4 eingesetzt ist, verdeckt sei einen Teil der Klammer beziehungsweise des Befestigungselements 14, so dass sie/es nicht verwendet werden kann und auch nicht über die Oberfläche der Geräteseite 3 hinausragt. Wegen dieser Möglichkeit des Versenkens der Befestigungselemente können Befestigungselemente an allen Positionen installiert werden, die für alle möglichen Zusatzkomponenten benötigt werden.

Die Adapter- beziehungsweise Zwischenplatte 5 oder 6 kann zwischen zwei Installationsgeräten herausgeführt werden und als kostengünstige Halterung für am Geräteumfang angebaute Zusatzfunktionen verwendet werden.

## Patentansprüche

1. Installationsgerät mit
- einem Gehäuse, wobei an mindestens einer Wand (3) des Gehäuses mindestens eine Bohrung und/oder mindestens ein Zapfen (7) zum Verbinden mit einem weiteren Installationsgerät angeordnet ist, und
- einer Vertiefung (4) in der mindestens einen Wand (3), wobei die mindestens eine Bohrung und/oder der mindestens eine Zapfen (7) in der Vertiefung (4) angeordnet ist/sind, und einer Adaptervorrichtung
**dadurch gekennzeichnet, dass**
- die Adaptervorrichtung in die Vertiefung (4) bündig eingesetzt ist, und
- die Adaptervorrichtung ein im Wesentlichen ebenes Grundelement (5, 6) besitzt, das mindestens eine Bohrung (8, 9) und/oder mindestens einen Zapfen (10, 11) aufweist, so dass es mit einer ersten Seite parallel zu seiner Hauptausdehnungsebene an das Installationsgerät (1) angebracht und mit einer zweiten Seite parallel zu seiner Hauptausdehnungsebene an ein zweites Installationsgerät bündig anbringbar ist.

2. Installationsgerät nach Anspruch 1, das als Schalter oder Antrieb ausgestaltet ist.

3. Installationsgerät nach Anspruch 1 oder 2, wobei mindestens ein Befestigungselement (14) zum Befestigen von Installationsgeräten aneinander im Bereich der Vertiefung (4) angeordnet ist.

4. Installationsgerät nach Anspruch 3, wobei das mindestens eine Befestigungselement (14) in der Vertiefung (4) versenkbar ist.

5. Installationsgerät nach einem der Ansprüche 1 bis 4, das je eine Vertiefung (4) an zwei seiner Seiten umfasst.

6. Installationsgerät nach einem der Ansprüche 1 bis 5, das einen Hinterschnitt an den Rändern der Vertiefung (4) aufweist, wobei die Adaptervorrichtung in die Vertiefung einschiebbar ist, so dass die Adaptervorrichtung senkrecht zu der Wand (3) des Gehäuses fixiert ist.

7. Installationsgerät nach Anspruch 1, wobei der mindestens eine Zapfen (10, 11) der Adaptervorrichtung aus dem Grundelement (5, 6) herausnehmbar ist.

8. Installationsgerät nach Anspruch 1, wobei ein bewegbarer Mitnehmer (12) in das Grundelement (5, 6) eingebaut ist.

## Claims

1. Installation device with
- a housing with at least one hole and/or at least one pin (7) for connection to a further installation device being disposed on at least one wall (3) of the housing, and
- with a recess (4) in the at least one wall (3), with the at least one hole and/or the at least one pin (7) being disposed in the recess (4), and an adapter device **characterised in that**
- the adapter device is inserted flush into the recess (4), and
- the adapter device possesses a substantially flat base element (5, 6), featuring at least one hole (8, 9) and/or at least one pin (10, 11), so that it is able to be attached to the installation device (1) with a first side parallel to the plane of its main extent and is able to be attached flush to a second installation device with a second side parallel to the plane of its main extent.

2. Installation device according to claim 1, which is equipped as a switch or as a drive.

3. Installation device according to claim 1 or 2, with at least one attachment element (14) for attaching installation devices to each other being arranged in the area of the recess (4).

4. Installation device according to claim 3, with the at least one attachment element (14) able to be sunken (4) into the recess.

5. Installation device according to one of claims 1 to 4, comprising a recess (4) on two of its sides.

6. Installation device according to one of claims 1 to 5, featuring an undercut at the edges of the recess (4) , with the adapter device able to be inserted into the recess so that the adapter device is fixed perpendicular to the wall (3) of the housing.

7. Installation device according to claim 1, with the at least one pin (10, 11) of the adapter device able to be taken out of the base (5, 6) element.

8. Installation device according to claim 1, with a movable dog (12) being built into the base element (5, 6).

## Revendications

1. Appareil d'installation comprenant
- un boîtier, au moins un perçage et/ou au moins un tenon (7) étant disposé(s) sur au moins une paroi (3) du boîtier pour la liaison avec un autre appareil d'installation, et
- une cavité (4) dans l'au moins une paroi (3), l'au moins un perçage et/ou l'au moins un tenon (7) étant disposé(s) dans la cavité (4), et un dispositif adaptateur,
**caractérisé en ce que**
- le dispositif adaptateur est inséré en affleurement dans la cavité (4), et
- le dispositif adaptateur présente un élément de base (5, 6) sensiblement plan, qui présente au moins un perçage (8, 9) et/ou au moins un tenon (10, 11), de sorte qu'il est placé avec un premier côté parallèlement à son plan d'étendue principale sur l'appareil d'installation (1) et peut être placé en affleurement avec un second côté parallèlement à son plan d'étendue principale sur un second appareil d'installation.

2. Appareil d'installation selon la revendication 1, qui est conçu comme commutateur ou entraînement.

3. Appareil d'installation selon la revendication 1 ou 2, au moins un élément de fixation (14) pour la fixation d'appareils d'installation les uns contre les autres étant disposé dans la zone de la cavité (4).

4. Appareil d'installation selon la revendication 3, l'au moins un élément de fixation (14) pouvant être noyé dans la cavité (4).

5. Appareil d'installation selon l'une quelconque des revendications 1 à 4, qui comporte une cavité (4) sur deux de ses côtés.

6. Appareil d'installation selon l'une quelconque des revendications 1 à 5, qui présente une contre-dépouille sur les bords de la cavité (4), le dispositif adaptateur pouvant être coulissé dans la cavité, de sorte que le dispositif adaptateur est fixé perpendiculairement à la paroi (3) du boîtier.

7. Appareil d'installation selon la revendication 1, l'au moins un tenon (10, 11) du dispositif adaptateur pouvant être enlevé de l'élément de base (5, 6).

8. Appareil d'installation selon la revendication 1, un entraîneur (12) mobile étant monté dans l'élément de base (5, 6).
